# EUROPÄISCHE PATENTSCHRIFT

(11) **EP 0 547 432 B1**
(45) Veröffentlichungstag und Bekanntmachung des Hinweises auf die Patenterteilung: **28.02.1996**
(21) Anmeldenummer: 92120530.8
(22) Anmeldetag: 02.12.1992
(51) Int. Cl.: G11B 5/702

(54) **Magnetische Aufzeichnungsträger**
Magnetic recording medium
Milieu d'enregistrement magnétique

(30) Priorität: 18.12.1991 DE 4141838; 18.12.1991 DE 4141839
(43) Veröffentlichungstag der Anmeldung: 23.06.1993
(73) Patentinhaber: BASF Magnetics GmbH, D-68165 Mannheim (DE)
(72) Erfinder: Bobrich, Michael, Dr., W-6737 Boehl-Iggelheim (DE); Lehner, August, W-6701 Roedersheim-Gronau (DE); Roller, Hermann, W-6700 Ludwigshafen (DE); Suettinger, Rudolf, Dr., W-6900 Heidelberg (DE); Kress, Ria, Dr., W-6700 Ludwigshafen (DE); Schneider, Norbert, W-6701 Altrip (DE); Lenz, Werner, Dr., W-6702 Bad Duerkheim (DE); Engelhardt, Peter, W-3253 Hessisch Oldendorf (DE); Rudolf, Peter, Dr., W-6701 Maxdorf (DE); Brodt, Gregor, Dr., W-6148 Heppenheim (DE); Balz, Werner, Dr., W-6703 Limburgerhof (DE); Kohl, Albert, W-6711 Laumersheim (DE)
(74) Vertreter: Langfinger, Klaus-Dieter, Dr.

(56) Entgegenhaltungen:
- EP-A- 0 298 611
- EP-A- 0 414 111

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines in einer Bindemittelmischung aus einem Polyurethanharnstoff(meth)acrylat und einem Polyurethan dispergierten magnetischen Materials.

An magnetische Aufzeichnungsträger werden bezüglich Aufzeichnung, Wiedergabe und Alterungsbeständigkeit immer höhere Anforderungen gestellt. Um diesen Anforderungen gerecht zu werden, kommt dem Bindemittel eine zunehmende Bedeutung zu.

So wird zur Verbesserung der magnetischen Eigenschaften insbesondere der Remanenz eine erhöhte Packungsdichte des magnetischen Materials in der Schicht angestrebt, was eine Verringerung des Bindemittelanteils in der Schicht zur Folge hat. Ebenso wird versucht, ein verbessertes Signal-Rausch-Verhältnis und eine sehr enge Schaltfeldstärkenverteilung durch die Verwendung immer feinteiligerer magnetischer Materialien mit ausgeprägter und extrem gleichförmiger Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozeß als auch das Erreichen einer guten Dispersionsstabilität erheblich erschwert. Außerdem müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte, eine Erhöhung der Abrieb- und Verschleißfestigkeit gefordert. Des weiteren gilt, daß diese mechanische Stabilität der Magnetschicht auch bei hoher Temperatur und hoher Luftfeuchtigkeit gewährleistet sein muß.

Es ist bekannt, daß Magnetschichten, die starken mechanischen Beanspruchungen unterworfen werden, als Bindemittel sich vorteilhaft erweisende Polyurethanelastomere enthalten.

Besonders bewährt haben sich Polyesterurethane, wie sie in der DE-B 1 106 959, DE-B 2 753 694, EP-A 0 069 955 oder in der US-A 2 899 411 beschrieben sind.

Diese Bindemittel können jedoch alle oben beschriebenen Forderungen und Maßnahmen nicht mehr ausreichend erfüllen. In vielen Fällen wird die Pigmentbenetzung und -dispergierung, insbesondere bei den sehr feinteiligen Materialien ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechten Magnetwerten und daraus resultierend zu schlechten Bandeigenschaften in puncto Elektroakustik und Videodaten führt. Aus diesem Grund werden zur Erleichterung des Dispergiervorgangs niedermolekulare Dispergiermittel in kleineren Mengen hinzugefügt. Diese Dispergiermittel weisen jedoch Nachteile auf. So können niedermolekulare Dispergiermittel bei ungünstigen Klimabedingungen, wie hohe Temperatur und/oder hohe Luftfeuchtigkeit leicht ausschwitzen. Dadurch kommt es in Aufnahme- bzw. Wiedergabegeräten zu Ablagerungen an allen bandberührenden Teilen, besonders am Kopf, wodurch Pegeleinbrüche verursacht werden. Außerdem steigt die Reibung (Adhäsion) stark an, wodurch es zu einem Stillstand des Bandes, dem Blocken, kommen kann. Beim Einsatz von Dispergierharzen kann es andererseits zu Verträglichkeitsproblemen in der Dispersion kommen. Da diese Dispergiermittel polare Gruppen enthalten, nimmt die Hydrophilie der Schicht stark zu, und damit speziell im Feuchtklima auch Effekte wie Quellen der Schicht, Ausschwitzen der Dispergier- und Gleitmittel und Veränderungen im mechanischen Eigenschaftsniveau durch Veränderungen der "Weichmachereffekte".

Zur Verbesserung der Dispergiereigenschaften von Polyurethanbindemitteln wurde schon frühzeitig der Vorschlag gemacht, polare Gruppen in das Bindemittel einzubauen. Diese polaren Gruppen können prinzipiell über jede Komponente, die bei der Herstellung des Polyurethans verwendet wird, eingeführt werden. Am häufigsten ist die Verwendung von Polyestern mit polaren Gruppen (u.a. DE-A 28 33 845). Der Einbau von Diolen, die zusätzlich polare Gruppen tragen, wird beispielsweise in der JP-A 57 092 421, der DE-OS 38 14 536 oder der EP-A 193 084 beschrieben. Der nachträgliche Einbau der polaren Gruppen durch S_{N}-Reaktion an den OH-Endgruppen der Polyurethane wird in JP-A 57 092 422 offenbart. Diese Dispergierharze teilen zwar einerseits die Pigmente sehr gut auf, führen aber auf der anderen Seite, speziell bei steigender Feinteiligkeit der eingesetzten Magnetpigmente, zu Dispersionen mit extrem ungünstigen rheologischen Eigenschaften, wie erhöhter Fließgrenze und erhöhter Viskosität, so daß die weitere Verarbeitung dieser Dispersionen zu Magnetschichten mit großen Schwierigkeiten verknüpft ist. Des weiteren ist der Gehalt an ionogenen dispergieraktiven Gruppen in dem Dispergierharz auf eine maximale Konzentration beschränkt, da sonst negative Effekt, wie z.B. Überbrükkungsflockulation auftreten. Eine Erhöhung der Pigmentvolumenkonzentration auf der einen Seite und eine Verringerung der Teilchengröße auf der anderen Seite ist mit dem dann notwendigen Gehalt an Dispergierharz nicht mehr vereinbar.

Eine wesentliche Verbesserung des Dispergierverhaltens konnte mit niedermolekularen, OH-gruppenhaltigen Polyurethanen, wie sie in EP 0 099 533 beschrieben sind, erreicht werden. Aber auch diese Maßnahmen reichen nicht aus, die immer feinteiligeren Pigmente zu dispergieren und die immer weiter gestiegenen Anforderungen an die magnetischen Aufzeichnungsträger bezüglich Mechanik und magnetische Werte zu erfüllen.

Aufgabe der vorliegenden Erfindung war es daher, magnetische Aufzeichnungsträger bereitzustellen, deren magnetische Schicht ein Bindemittel auf der Basis eines Polyurethans, Gleitmittel und feinverteiltes magnetisches Material enthält und durch den Zusatz eines weiteren Bindemittels eine verbesserte Verschleißfestigkeit, insbesondere bei Temperatur- und Feuchtklimabelastung, eine erhöhte Remanenz, eine engere Schaltfeldstärkenverteilung sowie eine fehlerarme Schichtoberfläche aufweist. Fehlerarme magnetische Schichten mit guten Laufeigenschaften erfordern Bindemittelsysteme, welche außer der hohen Packungsdichte des magnetischen Materials, der hohen Remanenz, der engen Schaltfeldstärkenverteilung auch eine sehr stabile Magnetdispersion voraussetzen.

Es wurde nun gefunden, daß sich die Aufgabe mit magnetischen Aufzeichnungsträgern, bestehend aus einem nichtmagnetischen Trägermaterial und mindestens einer darauf haftfest aufgebrachten magnetisierbaren Schicht auf der Basis eines in einer Bindemittelmischung aus Polyurethanharnstoff(meth)acrylat und mindestens einem Polyurethan aus der Gruppe der Polyurethanelastomere, hochmolekularen OH-gruppenhaltigen Polyharnstoffurethane und niedermolekularen, OH-gruppenhaltigen Polyharnstoffurethan dispergierten magnetischen Material lösen läßt, wenn das Polyurethanharnstoff(meth)acrylat erhalten wird durch Umsetzung eines Poly(meth)acrylats auf bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol bestehend aus
0,1 bis 10 Gew.-% eines Diisocyanats
20 bis 80 Gew.-% eines Triisocyanats und
20 bis 60 Gew.-% eines Isocyanats mit einer Funktionalität von 4 bis 10
mit der Maßgabe, daß pro OH-Gruppe 1, 2 bis 3,0, bevorzugt 1,5 bis 2,5 NCO-Gruppen zur Reaktion gelangen und die restlichen NCO-Gruppen mit Ammoniak in Harnstoffgruppen überführt werden.

In einer bevorzugten Ausgestaltung der erfindungsgemäßen magnetischen Aufzeichnungsträger wird das im Bindemittelgemisch enthaltene Polyurethanharnstoff(meth)acrylat durch die Umsetzung eines Poly(meth)acrylats mit bis zu 2 OH-Endgruppen pro Mol und einem Molekulargewicht von insbesondere 400 bis 4000 mit dem genannten Gemisch aus aliphatischen Polyisocyanaten mit einer mittleren Funktionalität von 3,5 bis 5,5 NCO-Gruppen pro Mol besteht, erhalten. Hierzu eignet sich insbesondere ein Gemisch, das aus
0,3 bis 8 Gew.-% eines Diisocyanats,
30 bis 70 Gew.-% eines Triisocyanats und
20 bis 50 Gew.-% eines Isocanats mit einer Funktionalität von 4 bis 10
zusammengesetzt ist.

Das für die Herstellung des Polyurethanharnstoff(meth)acrylats herangezogene Poly(meth)acrylat ist ein Veresterungsprodukt aus (Meth)acrylsäure und einer Alkoholkomponente mit einem C₁-C₂₅-Alkylrest und 0 bis 2,5 % von einem Hydroxyalkyl(meth)acrylat mit einem C₁- bis C₂₅-Alkylenrest. Geeignete Alkylreste sind beispielsweise Methyl, Ethyl, Propyl, Butyl, Isopropyl, tert.-Butyl, Pentyl, Nonyl oder Stearyl. Geeignete Hydroxialkyl(meth)acrylate sind u.a. Ethandiolmonoacrylat, Propandiolmonoacrylat und Butandiolmonoacrylat.

Des weiteren ist es auch vorteilhaft, bei der Polymerisation die OH-Gruppen an den Kettenenden über OH-gruppenhaltige Polymerisationsinitiatoren, wie z.B. Hydroxiperoxide oder OH-gruppenhaltige Regler, wie z.B. tert. Butanol, Mercaptoethanol oder Ethanolamin abzustoppen.

Bei der Herstellung des Poly(meth)acrylats lassen sich auch andere bekannte Vinylmonomere einbauen, wie beispielsweise Vinylbenzol, Vinylchlorid, Vinylacetat, Vinylpropionat, Acryamid, Acrylnitril.

Geeignete Isocyanate und deren Umesetzungsprodukte sind unter anderem Toluylendiisocyanat, Diphenylmethandiisocyanat. Besonders geeignet sind aliphatische Isocyanate und deren Umsetzungsprodukte zu höhermolekularen Polyisocyanaten wie sie durch Addition von Di-, Tri- und eventuell Polyolen mit aliphatischen Diisocyanaten, bzw. durch Biuretisierung oder Isocyanuratbildung entstehen. Geeignete aliphatische Diisocyanate hierfür sind z.B. Hexamethylendiisocyanat oder Isophorondiisocyanat.

Die verbleibenden Isocyanatgruppen setzt man mit Ammoniak oder einem primären oder sekundären Amin zu Harnstoffgruppen um.

Die Polyurethanharnstoff(meth)acrylate, die aus den beschriebenen Bausteinen aufgebaut sind, weisen für ein gutes Aufteilungsverhalten und hohe Dispersionsstabilität eine breite Molekulargewichtsverteilung auf. Das Molekulargewicht beträgt zwischen 200 bis 50 000, bevorzugt 500 bis 40 000 (gemessen nach GPC) mit einem mittleren MG (Gewichtsmittel) von 1000 bis 10 000, insbesondere 2000 bis 8000 und bevorzugt 4000 bis 7000.

Werden Polyurethanharnstoff(meth)acrylate, die zu 90 % aus Di- und Triisocyanaten aufgebaut sind, verwendet, so ergeben sich instabile Dispersionen, die zu fehlerhaften Bändern führen. Bei der Verwendung von vorwiegend trifunktionellen Isocyanaten ist die Pigmentaufteilung zu langsam bzw. ungenügend und die Viskosität der Dispersionen steigt an. Dies führt dann zu einem sehr hohen Lösemittelanteil in der Dispersion.

Das so hergestellte Polyurethanharnstoff(meth)acrylat weist eine Härte nach DIN 53 157 von 20 bis 130 s, ferner einen E-Modul (Elastizitätsmodul gemäß DIN 53 457) im Bereich von 500 bis 2500 N/mm auf, eine Reißdehnung größer 70 % (DIN 53455) und eine Reißfestigkeit zwischen 25 und 70 N/mm (DIN 53455). Besonders günstig ist eine Pendelhärte (DIN 53 157) von 25 bis 125 s, ein E-Modul von 600 bis 2000 N/mm, eine Reißdehnung von 80 bis 500 % und eine Reißfestigkeit von 25 bis 50 N/mm.

Das neben dem Polyurethanharnstoff(meth)acrylat (Komponente 1) in der die magnetische Schicht des erfindungsgemäßen magnetischen Aufzeichnungsträger bildenden Bindemittelmischung enthaltene niedermolekulare OH-gruppenhaltige Polyharnstoffurethan (Komponente 2) ist in der EP-B 99 533 beschrieben. Es weist eine OH-Zahl zwischen 10 und 120 und ein Molekulargewicht (Zahlenmittel) von 1000 bis 40 000 auf und wird durch Umsetzung eines Polydiols, eines Diols und eines primären oder sekundären Aminoalkohols und gegebenenfalls eines Triols mit einem Diisocyanat erhalten, während die ebenfalls also Komponente 2 dienenden Polyurethanelastomere, insbesondere die hochmolekularen OH-gruppenhaltigen Polyharnstoffurethanelastomere, in der EP-A 281 873 beschrieben sind. Diese weisen eine OH-Zahl zwischen 6 und 30 und ein Molekulargewicht (Zahlenmittel) von 40 000 bis 200 000 auf.

Die vorteilhaften Eigenschaften der erfindungsgemäß aufgebauten magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugestzt wird. Für die Vernetzung kann eine Vielzahl organischer Di-, Tri- oder Polyisocyanate oder Isocyanatprepolymere bis zu einem Molekulargewicht von 10 000, vorzugsweise zwischen 500 und 3000, verwendet werden. Bevorzugt sind Polyisocyanate bzw. Isocyanatprepolymere, die mehr als zwei NCO-Gruppen pro Molekel tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die Menge an zugesetzter Polyisocyanatkomponente kann je nach den an das Aufzeichnungsmaterial gestellten Anforderungen, bezogen auf die OH-Gruppen der zu vernetzenden Bindemittel, im Unterschuß von bis zu 70 %, vorzugsweise bis zu 50 % oder im Überschuß von bis zu 100 %, vorzugsweise von bis zu 50 % erfolgen.

Das die Bindemittelmatrix der Magnetschicht der erfindungsgemäßen magnetischen Aufzeichnungsträger bildende Gemisch aus niedermolekularen OH-gruppenhaltigen Polyharnstoffurethan und Polyurethanharnstoff(meth)acrylat enthält das letztgenannte vorzugsweise in einer Menge von nicht mehr als 30 und insbesondere von nicht mehr als 15 Gew.-%. Für spezielle Anwendungszwecke ist es gegebenenfalls vorteilhaft, eine weitere Bindemittelkomponente in Mengen von 5 bis 50 und insbesondere von 10 bis 30 Gew.-Teilen, bezogen auf die resultierende Gesamtmittelmenge, zuzusetzen.

Diese zusätzlich im Bindemittelgemisch enthaltenen physikalisch trocknenden Bindemittel sind bekannt. Es handelt sich hierbei unter anderem um ein Polyvinylformal-Bindemittel, welches durch Hydrolyse eines Polymerisates eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.-% und insbesondere mindestens 80 Gew.-%. Geeignete Polyvinylformale haben einen Gehalt an Vinylalkohol-Gruppen von 5 bis 13 Gew.-%, einen Gehalt an Vinylformal-Gruppen von 80 bis 88 Gew.-%, ein spezifisches Gewicht von ca. 1,2 und eine Viskosität von 50 bis 120 mPas gemessen bei 20°C mit einer Lösung von 5 g Polyvinylformal in 100 ml Phenol-Toluol (1:1). In gleicher Weise geeignet sind neben dem Polvvinylformal Vinylchlorid-diol-mono- oder -di(meth)acrylat-Copolymerisate, die sich z.B. in an sich bekannter Weise durch Lösungscopolymerisation oder Supensionscopolymerisation von Vinylchlorid und dem Diol-monomethacrylat oder -monoacrylat herstellen lassen. Das hierfür zum Einsatz gelangende Diolmono- oder -diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.-% 1,2-Propandiol besteht. Die Copolymerisate haben zweckmäßigerweise einen Vinylchloridgehalt von 50 bis 95 Gew.-% und einen Diolacrylat- oder -methacrylat-Gehalt von 5 bis 50 Gew.-%. Besonders geeignete Copolymerisate besitzen vorzugsweise einen Gehalt von 70 bis 90 Gew.-% Vinylchlorid und 10 bis 30 Gew.-% Diolmonoacrylat bzw. Diolmonomethacrylat. Eine 15%ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 mPas auf. Der K-Wert nach H. Fikentscher (Cellulosechemie 13 (1932), S. 58 ff.), der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel 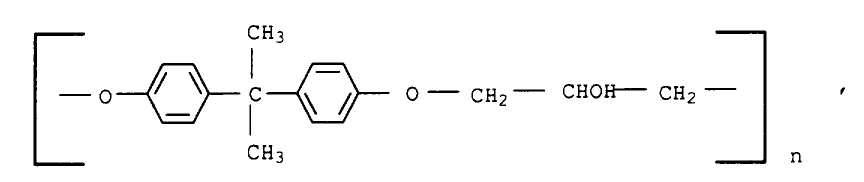 in der n annähernd gleich 100 ist, zu beschreiben ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z.B. Celluloseacetat, Cellulosetriacetat, Celluloseacetopropionat, Celluloseacetobutyrat.

Die vorteilhaften Eigenschaften der erfindungsgemäßen aufgebauten magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Für die Vernetzung kann eine Vielzahl organischer Di-, Tri- oder Polyisocyanate oder Isocyanatprepolymere bis zu einem Molekulargewicht von 10 000, vorzugsweise zwischen 500 und 3000, verwendet werden. Bevorzugt sind Polyisocyanate bzw. Isocyanatprepolymere, die mehr als zwei NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die Menge an zugesetzter Polyisocyanatkomponente kann je nach den an das Aufzeichnungsmaterial gestellten Anforderungen, bezogen auf die OH-Gruppen der zu vernetzenden Bindemittel, im Unterschuß von bis zu 70 %, vorzugsweise bis zu 50 % oder im Überschuß von bis zu 100 %, vorzugsweise von bis zu 50 % erfolgen.

Die weitere Verarbeitung des Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschicht wesentlich beeinflussen, wie z.B. Gamma-Eisen(III)-oxid, feinteiliger Magnetit, ferromagnetisches undotiertes oder dotiertes Chromdioxid, kobaltmodifiziertes Gamma-Eisen(III)-oxid, Bariumferrite oder ferromagnetische Metallteilchen. Bevorzugt sind nadelförmiges kobaltmodifiziertes oder unmodifiziertes Gamma-Eisen(III)-oxid sowie ferromagnetisches Chromdioxid und Metallpigment. Die Teilchengröße beträgt im allgemeinen 0,2 bis 2 µm, bevorzugt ist der Bereich von 0,2 bis 0,8 µm. Besonders bevorzugt sind Chromdioxid und Abmischungen von Chromdioxid mit bis zu 60 Gew.-% kobaltdotiertem Eisenoxid.

In an sich bekannter Weise können die Magnetschichten ferner Zusätze, wie Gleitmittel und in untergeordneten, gegenüber dem Stand der Technik geringen Mengen Dispergiermittel, aber auch Füllstoffe enthalten, die bei der Dispergierung der Magnetpigmente oder bei der Herstellung der Magnetschicht zugemischt werden.

Das Mengenverhältnis von magnetischem Material zu Bindemittel in den erfindungsgemäßen Aufzeichnungsmaterialien liegt zwischen 1 bis 10 und insbesondere 3 bis 6 Gewichts-Teilen magnetisches Material auf ein Gewichtsteil des Bindemittelgemisches. Es ist ein besonderer Vorteil, daß aufgrund des vorzüglichen Pigmentbindevermögens der speziellen Bindemittelmischung hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. zweckmäßig wird die in einer Dispergiermaschine, z.B. einer Topfkugelmühle oder einer Rührwerksmühle, aus dem magnetischen Material und einer Lösung der Bindemittel unter Zusatz von Gleitmitteln und evtl. geringen Mengen Dispergiermitteln hergestellte Magnetpigmentdispersion nach dem Zumischen des Polyisocyanatvernetzers filtriert und mit der üblichen Beschichtungsmaschine, z.B. mittels eines Linealgießers, auf den nichtmagnetischen Träger aufgetragen. Zur Erzielung von hohen Ela- und Magnetwerten bei einer kürzeren Dispergierzeit ist es von Vorteil, die Dispergierung mit der Komponente 1 durchzuführen und die Komponenten 2 nach der Dispergierung einzurühren. Dieses Verfahren bietet sich an, denn die genannte Komponente 2 ist mit der Komponente 1 gut verträglich. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 90°C, geglättet und verdichtet werden. Dabei hat es sich bei vernetzenden Bindemitteln als sehr vorteilhaft erwiesen, die Kalandrierung vorzunehmen, bevor die Vernetzung abgeschlossen ist, da die OH-Polymeren in unvernetzten Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger zeichnen sich gegenüber solchen nach dem Stand der Technik durch eine verbesserte Feinrauhigkeit der Magnetschichtoberfläche, eine gesteigerte Verschleißfestigkeit insbesondere bei Temperatur- und Feuchtklimabelastung, sowie durch erhöhte magnetische Kenndaten aus. Als Folge dieser verbesserten feinrauhen Oberflächen und erhöhter Magnetwerte steigt im Videobereich der HF-Pegel und der Chromapegel, aber auch der HiFi-Pegel deutlich an. Eine weitere Konsequenz dieser verbesserten Eigenschaften ist ein größerer Störabstand, bedingt durch ein verringertes Rauschen, speziell des Modulationsrauschens, was die Notwendigkeit zur Verwendung noch feinteiligerer Magnetpigmente verringert. Die größeren Pigmentnadeln lassen sich aber bei gleichem Richtaufwand besser richten und ergeben somit höhere Remanenz- und Pegelwerte als feinteiligere Magnetpigmente. Gegenüber dem Stand der Technik kann somit der technische Aufwand zur Dispergierung, Beschichtung und Ausrichtung der Magnetschicht reduziert werden, ohne auf die Vorteile der hohen Aufzeichnungsdichte verzichten zu müssen. Durch die Verringerung des Dispergieraufwands, der Dispergierzeit, aber auch den hohen Festkörpergehalt der Dispersion sowie der gesteigerten Langzeitstabilität der Dispersion lassen sich die erfindungsgemäßen magnetischen Aufzeichnungsträger in einfacher und wirtschaftlicher Weise herstellen.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Das in den Beispielen eingesetzte Polyharnstoff(meth)acrylat ist aufgebaut aus einem OH-gruppenhaltigen Polyacrylat mit einem mittleren Molekulargewicht von 5000 und einem Biuretpolyisocyanat mit einer mittleren Funktionalität von 3,8, bestehend aus 0,5 % Diisocyanat, 60 % Triisocyanat und dem Rest Polyisocyanat mit einer mittleren Funktionalität von 4,8, wobei die restlichen NCO-Gruppen am Kettenende durch Ammoniak in Harnstoffgruppen überführt werden.

### Beispiel 1

In einer Rührwerkskugelmühle mit einem Inhalt von 1,5 1, gefüllt mit 2,7 kg keramischen Kugeln mit einem Durchmesser zwischen 1 und 1,5 mm, wurden 4500 g Tetrahydrofuran, 912 g einer 50%igen Lösung eines Polyurethanharnstoffs mit einer OH-Zahl von 55, 126 g einer 50%igen Lösung eines Polyurethanharnstoff(meth)acrylats, 510 g einer 20%igen Lösung eines Polyvinylformals, 3000 g eines ferromagnetischen Chromdioxids mit einer H_{c} von 56 kA/m mit einer mittleren Nadellänge von 0,24 µm und einer BET von 33 m/g, 30 g Zinkoleat, 15 g Stearinsäure, 30 g Methylstearat eingefüllt und der Ansatz 12 Stunden dispergiert. Die Dispersion wurde dann unter Druck filtriert und unmittelbar vor dem Auftragen auf eine 15 µm dicke Polyethylenterephthalatfolie unter Rühren mit, bezogen auf 1 Teil Dispersion, 0,04 Teilen einer 50%igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50°C und 80°C getrocknet und durch Hindurchführen zwischen beheizten Walzen unter Druck (Liniendruck 200 kg/cm) geglättet.

### Beispiel 2

Es wurde wie in Beispiel 1 beschrieben verfahren, jedoch mit der Ausnahme, daß die Dispergierzeit auf 6 Stunden reduziert wurde.

### Beispiel 3

Es wurde wie in Beispiel 1 beschrieben verfahren, jedoch mit der Ausnahme, daß 80 Teile Chromdioxid und 20 Teile cobaltdotiertes Eisenoxid (H_{c} = 63 KA/m, BET 40 m/g) eingesetzt wurden.

### Beispiel 4

Es wurde wie in Beispiel 3 beschrieben verfahren, jedoch mit der Ausnahme, daß 60 Teile Chromdioxid und 40 Teile cobaltdotiertes Eisenoxid (H_{c} = 63 kA/m, BET = 40/g) eingesetzt wurden.

### Beispiel 5

Es wurde wie in Beispiel 1 beschrieben verfahren, jedoch mit der Ausnahme, daß das bei 180°C getemperte Chromdioxid gegen ein Chromdioxid ersetzt wurde, welches bei 350°C getempert wurde und eine H_{c} von 51 kA/m aufwies.

### Beispiel 6

Es wurde wie in den Beispielen 1 und 3 beschrieben verfahren, jedoch wurden 10 Teile Chromdioxid mit einer H_{c} von 51 kA/m und einer BET von 32 m/g und 90 Teile cobaltdotiertes Eisenoxid, H_{c} = 54 kA/m, BET = 35 m/g) eingesetzt. Dazu wurde der Gehalt der 50%igen Lösung des Polyurethanharnstoffacrylats auf 380 g erhöht und der Gehalt der 50%igen Lösung des Polyurethanharnstoffs mit einer OH-Zahl von 55 auf 658 g abgesenkt.

### Vergleichsbeispiel 1

Es wurde wie in Beispiel 1 beschrieben verfahren, jedoch wurde nur das Polyurethanharnstoff(meth)acrylat durch den OH-gruppenhaltigen Polyurethanharnstoff mit einer OH-Zahl von 55 ersetzt.

### Vergleichsbeispiel 2

Es wurde wie in Vergleichsbeispiel 1 beschrieben verfahren, jedoch wurde die Dispergierzeit auf 6 Stunden reduziert.

### Vergleichsbeispiel 3

Es wurde wie in Beispiel 3 beschrieben verfahren, jedoch wurde das Polyurethan-harnstoffacrylat durch den OH-gruppenhaltigen Polyurethanharnstoff mit einer OH-Zahl von 55 ersetzt.

### Vergleichsbeispiel 4

Es wurde wie im Vergleichsbeispiel 3 beschrieben verfahren, jedoch wurden 60 Teile Chromdioxid und 40 Teile cobaltdotiertes Eisenoxid (H_{c} = 63 kA/m, BET = 40 m/g) eingesetzt.

### Vergleichsbeispiel 5

Es wurde wie in Vergleichsbeispiel 1 beschrieben verfahren, jedoch wurde das bei 180°C getemperte Chromdioxid gegen ein Chromdioxid ersetzt, welches bei 350°C getempert wurde und eine H_{c} von 51 kA/m aufwies.

### Vergleichsbeispiel 6

Es wurde wie in den Vergleichsbeispielen 1 und 3 beschrieben verfahren, jedoch wurden 10 Teile Chromdioxid (H_{c} = 51 kA/m, BET = 32 m/g) und 90 Teile cobaltdotiertes Eisenoxid (H_{c} = 54 kA/m, BET = 35m/g) eingesetzt.

Die Verwendung der Polyurethanharnstoff(meth)acrylate führt zu stabilen, warzenfreien Dispersionen, die feinrauhere glatte Oberflächen, bessere Magnetwerte und daraus resultierend ebenfalls bessere ELAV-daten liefern. Gleichzeitig ist die Bandmechanik verbessert, erkennbar am verbesserten Laufverhalten im Feuchtklima.

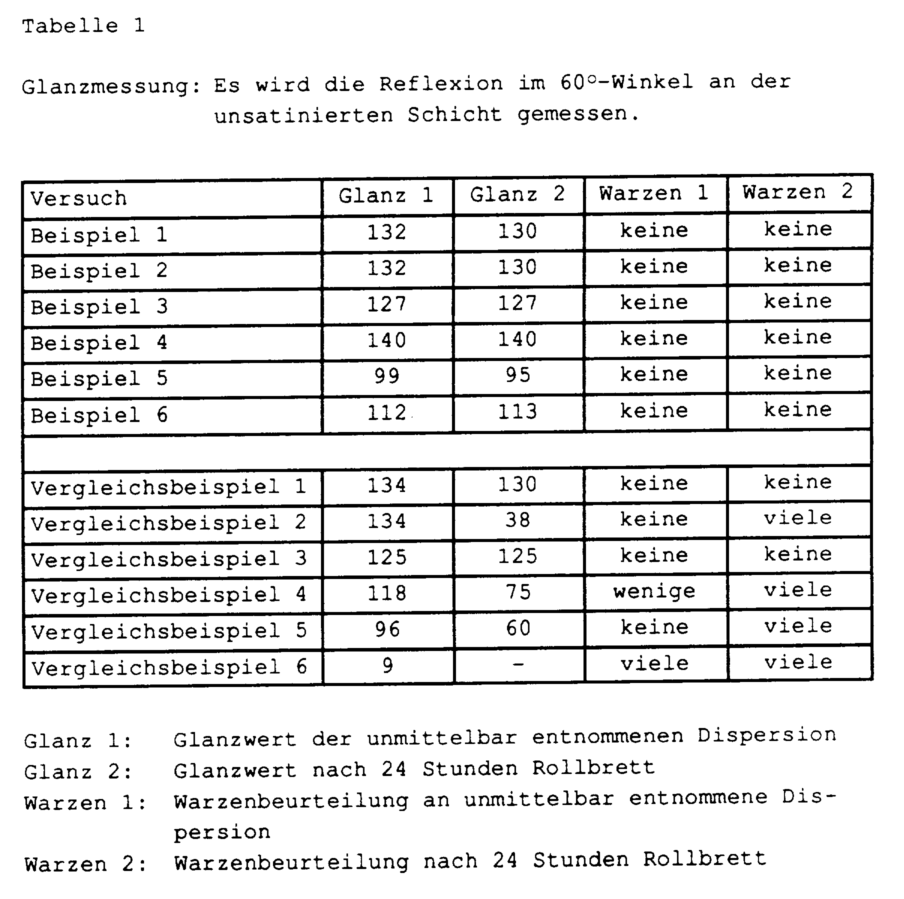

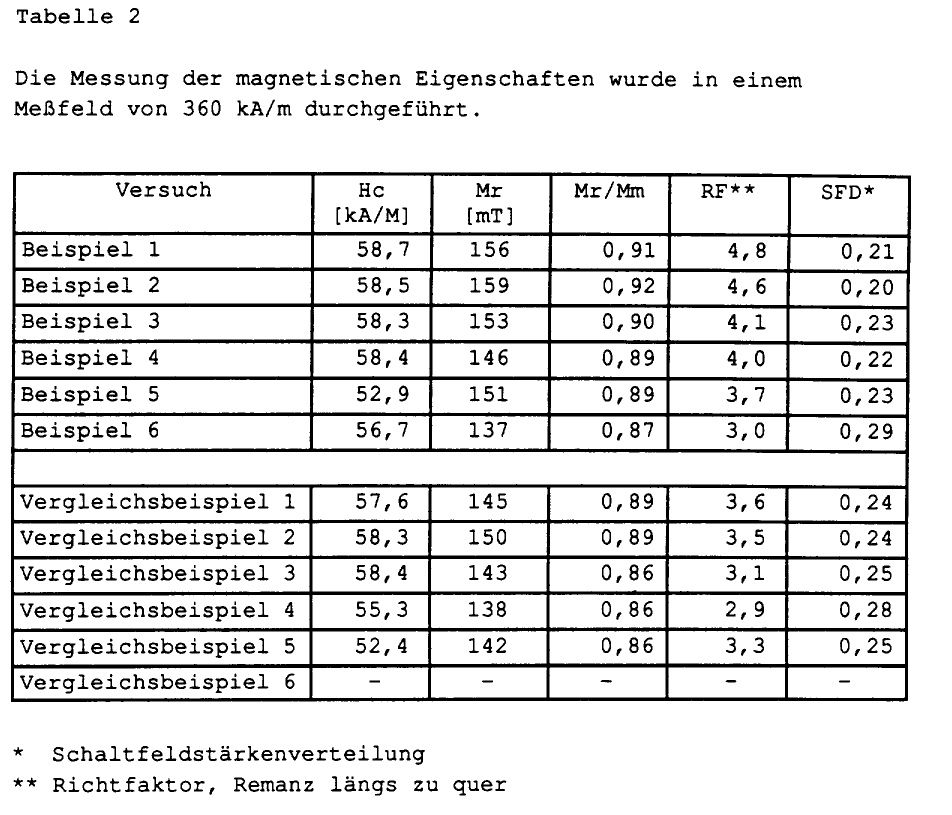

Nach dem Schneiden der gemäß den Beispielen und Vergleichsbeispielen beschichteten Folien in 1/2 Zoll breite Bänder wurden die elektroakustischen und Videodaten wie folgt bestimmt:

Auf einem
* S-VHS-Recorder der Firma Victor Company of Japan gegen das Bezugsband SRT-1 (O dB) (Beispiele 1 bis 3 und Vergleichsversuche 1 bis 3) und auf einem
* VHS-Recorder der Firma Victor Company of Japan gegen das Bezugsband BRV 84 (O dB) (Beispiele 4 bis 6 und Vergleichsversuche 4 und 5)
wurden folgende Messungen durchgeführt : Videopegel (Luminanzsignal): Luminanzsignal eines 100 % Weißbildes, gemessen mit dem Störspannungsmesser UPSF der Firma Rohde und Schwarz (> 100 kHz).

Videoströabstand (Video-S/N): Verhältnis des Luminanzsignals eines 100 % Weißbildes zum Rauschpegel, gemessen mit dem Störspannungsmesser UPSF der Firma Rohde und Schwarz (>100 kHz).

Farbstörabstand (Farb-S/N): Verhältnis des Farbsignals einer Rotfläche zum Rauschpegel, gemessen mit dem Störspannungsmesser UPSF der Firma Rohde und Schwarz (100 kHz-3 MHz).

Die Meßverhältnisse sind in der Tabelle 3 angegeben.

**Tabelle 3**

| Versuch | HF- Pegel | S/N | Farb- S/N | FSM | HiFi-Pegel 1,8 MHz |
|---|---|---|---|---|---|
| Beispiel 1 | -0,4 | -0,9 | -1,3 | -2,0 | -2,3 |
| Beispiel 2 | -0,4 | -1,0 | -0,7 | -6,7 | -2,2 |
| Beispiel 3 | -0,6 | -1,0 | -0,9 | -1,5 | -2,8 |
| Beispiel 4 | 2,1 | 3,1 | -0,8 | 0,0 | - |
| Beispiel 5 | 2,0 | 4,2 | 0,1 | 3,8 | -5,2 |
| Beispiel 6 | 1,9 | 4,5 | -0,4 | -1,7 | - |
| | | | | | |
| Vergleichsbeispiel 1 | -0,6 | -2,3 | -1,7 | -2,2 | -3,0 |
| Vergleichsbeispiel 2 | -0,6 | -2,7 | -1,5 | -9,3 | -3,0 |
| Vergleichsbeispiel 3 | -0,7 | -0,9 | -1,3 | -3,0 | -3,0 |
| Vergleichsbeispiel 4 | 0,9 | 2,1 | -0,4 | -2,8 | - |
| Vergleichsbeispiel 5 | 1,1 | 3,8 | -0,4 | 1,3 | -5,5 |
| Vergleichsbeispiel 6 | - keine Messungen möglich - | | | | |

Außerdem wurde der Dauerlauf im Feuchtklima bestimmt. Dazu wurden die Cassetten bei einem Klima von 40°C und 85 % rel. Feuchte einem Dauerbetrieb von 100 Zyklen a 2 Stunden unterworfen.

Die Meßergebnisse sind in Tabelle 4 angegeben.

**Tabelle 4**

| Versuch | Dauerlauf |
|---|---|
| Beispiel 1 | i. O. |
| Beispiel 2 | i. O. |
| Beispiel 3 | i. O. |
| Beispiel 4 | i. O. |
| Beispiel 5 | i. O. |
| Beispiel 6 | i. O. |
| | |
| Vergleichsbeispiel 1 | i. O. |
| Vergleichsbeispiel 2 | blockt |
| Vergleichsbeispiel 3 | i. O. |
| Vergleichsbeispiel 4 | blockt |
| Vergleichsbeispiel 5 | blockt |
| Vergleichsbeispiel 6 | - |

### Beispiel A1

In einer Stahlkugelmühle üblicher Bauart mit Stahlkugeln als Mahlkörper wurden 1000 Gew.-Teile eines Chromdioxids mit einer mittleren Teilchenlänge von 0,5 µm und einem Länge-zu-Dicke-Verhältnis von 4:1 zusammen mit 88 Gew.-Teilen einer 13 %igen Lösung eines Polyurethanelastomeren, 86 Gew.-Teilen einer 20 %igen Lösung eines Polyvinylformals, bestehend aus 82 % Vinylformal-, 12 % Vinylacetat- und 6 % Vinylalkoholeinheiten, 69 Gew.-Teile des Polyurethanharnstoffacrylats (50 %ig), 10 Gew.-Teile Leinölfettsäure und 970 Gew.-Teile Tetrahydrofuran/Dioxan (1:1) 72 Stunden dispergiert.

Anschließend wurde zu dieser Dispersion ein Gemisch aus 864 Gew. -Teilen der 13 %igen Polyurethanelastomerenlösung, 57 Gew.-Teilen 20 %igen Polyvinylformallösung, 28,8 Gew.-Teilen Tetrahydrofuran/Dioxan (1:1) zugegeben und weitere 2 Stunden dispergiert.

Zu 1 kg der so erhaltenen Dispersion wurden 19,9 Gew.-Teile eines 50 %igen Triisocyanats, erhalten aus 3 mol Toluylendiisocyanat und 1 mol Trimethylpropan, gegeben und anschließend durch ein Filter mit einer Porenweite von 3 µm filtriert.Nach dem Auftragen der Dispersion auf eine 15 µm dicke Polyesterfolie und nach Durchlaufen der beschichteten Folie zur Ausrichtung der Magnetteilchen wurde diese bei Temperaturen zwischen 50 und 80°C durch Hindurchführen zwischen beheizten Walzen unter Druck geglättet.

### Vergleichsversuch A1

Es wurde wie in Beispiel Al beschrieben verfahren, jedoch ohne Zusatz des Polyurethanharnstoffacrylats. Zugegeben wurden 5 Gew.-Teile N-Talgfett-1,3-Diamin-oleat und 20 Gew.-Teile Zinkstearat.

### Beispiel A2

In einer Stahlkugelmühle üblicher Bauart mit Stahlkugeln als Mahlkörper wurden 1000 Gew.-Teile eines Chromdioxids mit einer mittleren Teilchenlänge von 0,5 µm und einem Länge-zu-Dicke-Verhältnis von 4:1 zusammen mit 51,5 Gew.-Teilen einer 13 %igen Lösung eines Polyurethanelastomeren, 150 Gew.-Teilen einer 20 %igen Lösung eines Polyvinylformals, bestehend aus 82 % Vinylformal-, 12 % Vinylacetat- und 6 % Vinylalkoholeinheiten, 54,5 Gew.-Teile des Polyurethanharnstoffacrylats (50 %ig), 10 Gew.-Teile Leinölfettsäure und 1311 Gew.-Teile Tetrahydrofuran/Dioxan (1:1) 72 Stunden dispergiert.

Anschließend wurde zu dieser Dispersion ein Gemisch aus 1025 Gew.-Teilen der 13 %igen Polyurethanelastomerenlösung zugegeben und weitere 2 Stunden dispergiert.

Zu 1 kg der so erhaltenen Dispersion wurden 12,2 Gew.-Teile eines 50 %igen Triisocyanats, erhalten aus 3 mol Tolyulendiisocyanat und 1 mol Trimethylpropan, gegeben und anschließend durch ein Filter mit einer Porenweite von 3 µm filtriert. Nach dem Auftragen der Dispersion auf eine 15 µm dicke Polyesterfolie und nach Durchlaufen der beschichteten Folie zur Ausrichtung der Magnetteilchen wurde diese bei Temperaturen zwischen 50 und 80°C durch Hindurchführen zwischen beheizten Walzen unter Druck geglättet.

### Beispiel A3

Es wurde wie in Beispiel A2 beschrieben verfahren, jedoch wurden anstatt der 150 Gew.-Teile des Polyvinylformals 205 Gew.-Teile der 13 %igen Polyurethanelastomerlösung und 73 Gew.-Teile des 50 %igen Polyurethanharnstoffacrylats eingesetzt.

### Vergleichsbeispiel A2

Es wurde wie in Beispiel A3 beschrieben verfahren, jedoch ohne Zugabe des Polyurethanharnstoffacrylats.

### Vergleichsversuch A3

Es wurde wie in Vergleichsversuch A2 beschrieben verfahren, jedoch wurden 5 Gew.-Teile N-Talgfett-1,3-Diaminoleat und 20 Gew.-Teile Zinkstearat zugesetzt.

Die nach den Beispielen A1 bis A3 und Vergleichsversuchen A1 bis A3 erhaltenen magnetischen Aufzeichnungsträgern wurden wie folgt geprüft:

Die Messung der magnetischen Eigenschaften erfolgte in einem Meßfeld von 360 kA/m und zwar die Koerzitivfeldstärke H_{c} in [kA/m], die remanente Magnetisierung Mᵣ und die Sättigungsmagnetisierung Mₘ in [mT] sowie der Richtfaktor Rf, die remanente Magnetisierung längs der magnetischen Vorzugsrichtung zu derjenigen quer dazu. Außerdem wurde der Gehalt an Chrom(VI)ionen in einem wäßrigen Extrakt photometrisch mit Diphenylcarbazid nach DIN 53 780 bestimmt (Eluatwert in mg). Die entsprechenden Meßergebnisse sind in der Tabelle 1 angegeben.

**Tabelle 1**

| | H_{c} | Mₘ | Mᵣ | Mᵣ/Mₘ | R_{f} | Eluat |
|---|---|---|---|---|---|---|
| Bsp. A1 | 41,3 | 204 | 180 | 0,88 | 3,7 | 0,6 |
| Bsp. A2 | 49,2 | 187 | 167 | 0,90 | 3,8 | 1,2 |
| Bsp. A3 | 49,2 | 189 | 171 | 0,90 | 3,8 | 0,9 |
| Vergl. Vers.A1 | 40,6 | 198 | 162 | 0,82 | 2.6 | 1,7 |
| Vergl. Vers.A2 | 48,8 | 159 | 127 | 0,80 | 1.9 | 1,4 |
| Vergl. Vers.A3 | 48,3 | 179 | 147 | 0,82 | 2,7 | 3,5 |

Nach dem Schneiden in 3,81 mm breite Bänder wurden die elektroakustischen Werte gemäß DIN 45401, 45403 und 455212 (Blatt 12) gegen das IEC II-Bezugsband geprüft. Die Meßergebnisse sind in der Tabelle 2 angegeben.

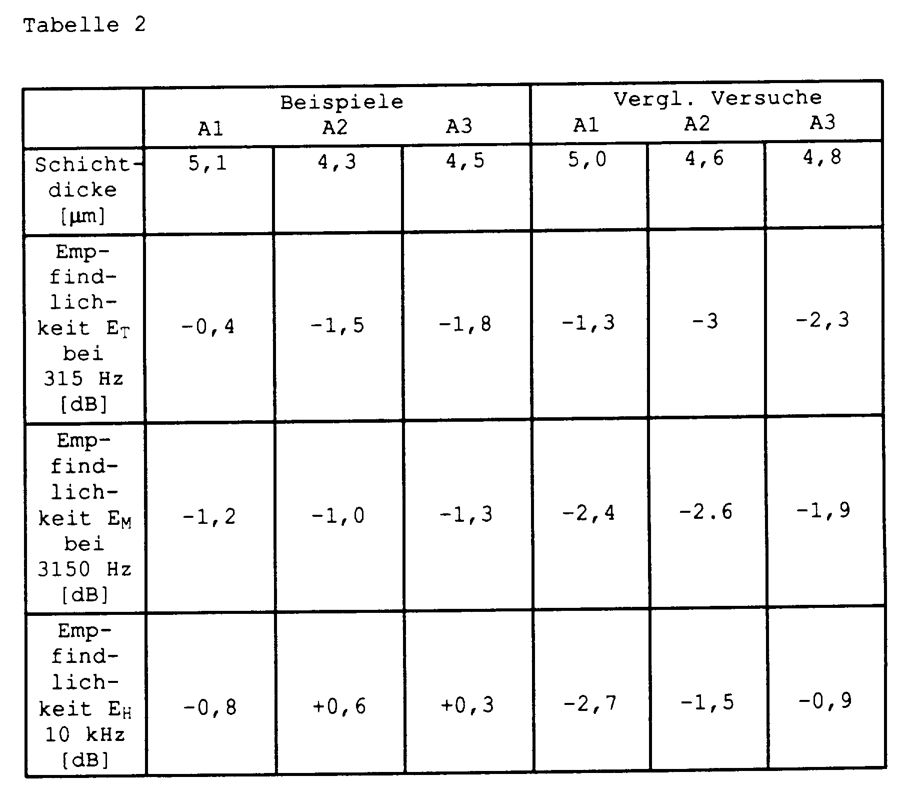

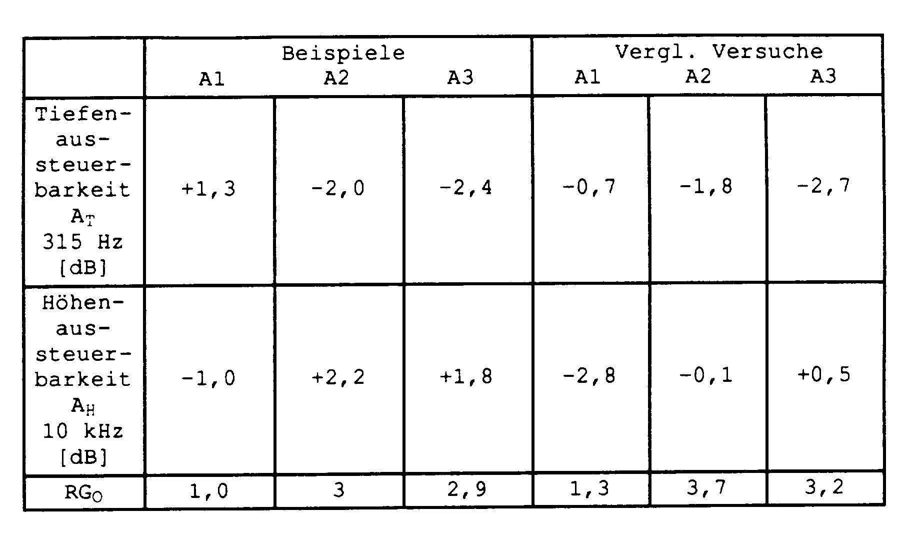

## Patentansprüche

1. Magnetische Aufzeichnungsträger, bestehend aus einem nichtmagnetischen Trägermaterial und mindestens einer darauf haftfest aufgebrachten magnetisierbaren Schicht auf der Basis eines in einer Bindemittelmischung aus einem Polyurethanharnstoff(meth)acrylat und mindestens einem Polyurethanelastomeren aus der Gruppe der hochmolekularen OH-gruppenhaltigen Polyharnstoffurethane mit einer OH-Zahl zwichen 6 und 30 und einem Molekulargewicht (Zahlenmittel ) von 40 000 bis 200 000 und der niedermolekularen, OH-gruppenhaltigen Polyharnstoffurethane mit einer OH-Zahl zwichen 10 und 120 und einem Molekulargewicht (Zahlenmittel) von 1000 bis 40 000 dispergierten magnetischen Materials, dadurch gekennzeichnet, daß das Polyurethanharnstoff(meth)acrylat erhalten wird durch Umsetzung eines Poly(meth)acrylats mit bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol bestehend aus
0,1 bis 10 Gew.-% eines Diisocyanats
20 bis 80 Gew.-% eines Triisocyants und
20 bis 60 Gew.-% eines Isocyanats mit einer Funktionalität von 4 bis 10
mit der Maßgabe, daß pro OH-Gruppe 1,2 bis 3,0 NCO-Gruppen zur Reaktion gelangen und die restlichen NCO-Gruppen mit Ammoniak in Harnstoffgruppen überführt werden.

2. Magnetische Aufzeichnungsträger, bestehend aus einem nichtmagnetischen Trägermaterial und mindestens einer darauf haftfest aufgebrachten magnetisierbaren Schicht auf der Basis eines in einer Bindemittelmischung aus einem Polyurethanharnstoff(meth)acrylat und mindestens einem Polyurethanelastomeren aus der Gruppe der hochmolekularen OH-gruppenhaltigen Polyharnstoffurethane mit einer OH-Zahl zwichen 6 und 30 und einem Molekulargewicht (Zahlenmittel ) von 40 000 bis 200 000 und der niedermolekularen, OH-gruppenhaltigen Polyharnstoffurethane mit einer OH-Zahl zwichen 10 und 120 und einem Molekulargewicht (Zahlenmittel) von 1000 bis 40 000 dispergierten magnetischen Materials, dadurch gekennzeichnet, daß das Polyurethanharnstoff(meth)acrylat erhalten wird durch Umsetzung eines Poly(meth)acrylats mit bis zu 2 OH-Endgruppen pro Mol und einem Molekulargewicht zwischen 200 und 50 000 mit einem Gemisch aus aliphatischen Polyisocyanaten mit einer mittleren Funktionalität von 3,0 bis 6 NCO-Gruppen pro Mol bestehend aus
0,1 bis 10 Gew.-% eines Diisocyanats
20 bis 80 Gew.-% eines Triisocyants und
20 bis 60 Gew.-% eines Isocyanats mit einer Funktionalität von 4 bis 10
mit der Maßgabe, daß pro OH-Gruppe 1,2 bis 3,0 NCO-Gruppen zur Reaktion gelangen und die restlichen NCO-Gruppen mit primären oder sekundären Aminen in Harnstoffgruppen überführt werden.

3. Magnetische Aufzeichnungsträger gemäß Anspruch 1 oder 2, dadurch gekennzeichnet, daß das Gemisch aus aliphatischen Polyisocyanaten eine mittlere Funktionalität von 3,5 bis 5,0 NCO-Gruppen pro Mol aufweist, mit der Maßgabe, daß pro OH-Gruppe 1,5 bis 2,5 NCO-Gruppen zur Reaktion gelangen.

## Claims

1. A magnetic recording medium consisting of a nonmagnetic substrate and at least one magnetizable layer bonded thereon and based on a magnetic material dispersed in a binder mixture of a polyurethaneurea (meth)acrylate and at least one polyurethane elastomer from the group consisting of high molecular weight OH-containing polyureaurethanes having an OH number of from 6 to 30 and a number average molecular weight of from 40,000 to 200,000 and of low molecular weight, OH-containing polyureaurethanes having an OH number of from 10 to 120 and a number average molecular weight of from 1,000 to 40,000, wherein the polyurethaneurea (meth)-acrylate is obtained by reacting a poly(meth)acrylate having up to 2 terminal OH groups per mol and a molecular weight of from 200 to 50,000 with a mixture of aliphatic polyisocyanates having an average functionality of from 3.0 to 6 NCO groups per mol and consisting of
from 0.1 to 10 % by weight of a diisocyanate
from 20 to 80 % by weight of a triisocyanate and
from 20 to 60 % by weight of an isocyanate having a functionality of from 4 to 10,
with the proviso that from 1.2 to 3.0 NCO groups react per OH group and the remaining NCO groups are converted with ammonia into urea groups.

2. A magnetic recording medium consisting of a nonnmagnetic substrate and at least one magnetizable layer bonded thereon and based on a magnetic material dispersed in a binder mixture of a polyurethaneurea (meth)acrylate and at least one polyurethane elastomer from the group consisting of high molecular weight OH-containing polyureaurethanes having an OH number of from 6 to 30 and a number average molecular weight of from 40,000 to 200,000 and of low molecular weight, OH-containing polyureaurethanes having an OH number of from 10 to 120 and a number average molecular weight of from 1,000 to 40,000, wherein the polyurethaneurea (meth)acrylate is obtained by reacting a poly(meth)acrylate having up to 2 terminal OH groups per mol and a molecular weight of from 200 to 50,000 with a mixture of aliphatic polyisocyanates having an average functionality of from 3.0 to 6 NCO groups per mol and consisting of
from 0.1 to 10 % by weight of a diisocyanate
from 20 to 80 % by weight of a triisocyanate and
from 20 to 60 % by weight of an isocyanate having a functionality of from 4 to 10
with the proviso that from 1.2 to 3.0 NCO groups react per OH group and the remaining NCO groups are converted with primary or secondary amines into urea groups.

3. A magnetic recording medium as claimed in claim 1 or 2, wherein the mixture of aliphatic polyisocyanates has an average functionality of from 3.5 to 5.0 NCO groups per mol, with the proviso that from 1.5 to 2.5 NCO groups react per OH group.

## Revendications

1. Support d'enregistrement magnétique, constitué d'un matériau-support non magnétique et d'au moins une couche magnétisable appliquée avec adhérence sur ledit support, à base d'un matériau magnétique dispersé dans un mélange de liants composé d'un (méth)acrylate de polyuréthane-urée et d'au moins un élastomère de polyuréthane choisi dans le groupe des polyurée-uréthanes à poids moléculaire élevé, contenant des groupes OH, d'un indice OH compris entre 6 et 30 et d'un poids moléculaire (moyenne en nombre) compris entre 40 000 et 200 000, et des polyurée-uréthanes à bas poids moléculaire, contenant des groupes OH, d'un indice OH compris entre 10 et 120 et d'un poids moléculaire (moyenne en nombre) compris entre 1000 et 40 000, caractérisé par le fait que le (méth)acrylate de polyuréthane-urée est obtenu en faisant réagir un poly(méth)acrylate ayant jusqu'à 2 groupes OH terminaux par mole et présentant un poids moléculaire compris entre 200 et 50 000, avec un mélange de polyisocyanates aliphatiques d'une fonctionnalité moyenne de 3,0 à 6 groupes NCO par mole, composé de
0,1 à 10 % en poids d'un diisocyanate
20 à 80 % en poids d'un triisocyanate et
20 à 60 % en poids d'un isocyanate d'une fonctionnalité de 4 à 10,
étant entendu que, par groupe OH, 1,2 à 3,0 groupes NCO réagissent et que les groupes NCO restants sont transformés avec de l'ammoniaque en groupes urée.

2. Support d'enregistrement magnétique, constitué d'un matériau-support non magnétique et d'au moins une couche magnétisable appliquée avec adhérence sur ledit support, à base d'un matériau magnétique dispersé dans un mélange de liants composé d'un (méth)acrylate de polyuréthane-urée et d'au moins un élastomère de polyuréthane choisi dans le groupe des polyurée-uréthanes à poids moléculaire élevé, contenant des groupes OH, d'un indice OH compris entre 6 et 30 et d'un poids moléculaire (moyenne en nombre) compris entre 40 000 et 200 000, et des polyurée-uréthanes à bas poids moléculaire, contenant des groupes OH, d'un indice OH compris entre 10 et 120 et d'un poids moléculaire (moyenne en nombre) compris entre 1000 et 40 000, caractérisé par le fait que le (méth)acrylate de polyuréthane-urée est obtenu en faisant réagir un poly(méth)acrylate ayant jusqu'à 2 groupes OH terminaux par mole et présentant un poids moléculaire compris entre 200 et 50 000, avec un mélange de polyisocyanates aliphatiques d'une fonctionnalité moyenne de 3,0 à 6 groupes NCO par mole, composé de
0,1 à 10 % en poids d'un diisocyanate
20 à 80 % en poids d'un triisocyanate et
20 à 60 % en poids d'un isocyanate d'une fonctionnalité de 4 à 10,
étant entendu que, par groupe OH, 1,2 à 3,0 groupes NCO réagissent et que les groupes NCO restants sont transformés en groupes urée avec des amines primaires ou secondaires.

3. Support d'enregistrement magnétique selon l'une des revendications 1 et 2, caractérisé par le fait que le mélange de polyisocyanates aliphatiques présente une fonctionalité moyenne de 3,5 à 5,0 groupes NCO par mole, étant entendu que, par groupe OH, 1,5 à 2,5 groupes NCO réagissent.
